# EUROPÄISCHE PATENTSCHRIFT

(11) **EP 1 488 096 B1**
(45) Veröffentlichungstag und Bekanntmachung des Hinweises auf die Patenterteilung: **03.01.2007**
(21) Anmeldenummer: 03706225.4
(22) Anmeldetag: 15.01.2003
(51) Int. Cl.: F02M 51/06, F02M 61/04, F02M 61/16, F16K 41/10

(54) **BRENNSTOFFEINSPRITZVENTIL**
FUEL INJECTION VALVE
SOUPAPE D'INJECTION DE CARBURANT

(30) Priorität: 19.03.2002 DE 10212152
(43) Veröffentlichungstag der Anmeldung: 22.12.2004
(73) Patentinhaber: ROBERT BOSCH GMBH, 70442 Stuttgart (DE)
(72) Erfinder: VORBACH, Marco, 71686 Remseck (DE)
(74) Vertreter: Körfer, Thomas
(86) Internationale Anmeldenummer: PCT/DE2003/000091
(87) Internationale Veröffentlichungsnummer: WO 2003/078826

(56) Entgegenhaltungen:
- DE-A- 19 946 869
- DE-A- 19 947 779
- US-A- 4 647 013
- US-A- 5 127 625
- US-A- 5 261 639

## Beschreibung

### Stand der Technik

Die Erfindung betrifft ein Brennstoffeinspritzventil, das zur Steuerung von Brennstoffdurchflüssen eine verschließbare Kammer besitzt die durch einen Schließkörper abgedichtet oder geöffnete werden kann, wobei eine flexible Membran einen Eintrag von Brennstoff aus der Kammer in den übrigen Teil des Ventils verhindert.

Ein Membran-Ventil ist, allerdings nicht als Brennstoffeinspritzventil, beispielsweise aus der EP 0 701 078 B1 bekannt. Nachteilig bei dem aus dieser Druckschrift bekannten Ventil ist insbesondere, daß die Herstellung dieses Ventils aufgrund der aufwendigen Befestigung der Membran hohe Kosten verursacht. So muß die Membran sowohl entlang ihres äußeren Umfangs als auch entlang des Verlaufs des Innenlochs am Ventilkörper bzw. an der Schließkörperstange befestigt werden. Zusätzliche Befestigungsstellen erhöhen die Anzahl möglicher Fehlerquellen, sowohl bei Montage als auch im Betrieb.

Ein anderes Membran-Ventil ist aus der US-5 261 639A bekannt.

### Vorteile der Erfindung

Das erfindungsgemäße Brennstoffeinspritzventil mit den Merkmalen des Hauptanspruchs hat demgegenüber den Vorteil, daß es wesentlich kostengünstiger und in der Ausführung zuverlässiger hergestellt werden kann. Da die Membran des erfindungsgemäßen Brennstoffeinspritzventils kein Loch, aufweist durch welches eine Ventilschließkörperstange oder ein Ventilschließkörper hindurchgreift, muß die Membran auch nicht entlang des Verlaufs des Umfangs des Innenlochs aufwendig hydraulisch dicht befestigt werden. Dadurch ergibt sich eine höhere Zuverlässigkeit der Dichtwirkung der Membran und ein wesentlich geringerer Montageaufwand bei der Herstellung.

Gegenüber Nadelventilen ergibt sich der Vorteil eines großen Öffnungsquerschnitts.

Durch den Eingriff des der Membran abgewandten Teils des Ventilschließkörpers in eine sphärische Vertiefung des Betätigungskörpers, wobei dadurch der Ventilschließkörper beweglich im Betätigungskörper gegenüber dem Ventilsitzkörper gelagert ist, ist es möglich, eventuell auftretende Winkelauslenkungen des Betätigungskörpers bzw. des Aktors gegenüber der idealerweise rechtwinklig angeordneten planen Auflagefläche des z. B. hohlzylinderförmigen Ventilsitzkörpers auszugleichen. So wird der Ventilsitzkörper sicher abgedichtet. Die elastische Beschaffenheit der Membran die bei geschlossenem Brennstoffeinspritzventil unmittelbar zwischen Ventilsitzkörper und Ventilschließkörper liegt, hilft zusätzlich den Ventilsitzkörper sicher zu verschließen.

Durch die in den Unteransprüchen aufgeführten Maßnahmen sind vorteilhafte Weiterentwicklungen des im Hauptanspruch angegebenen Brennstoffeinspritzventils möglich.

Vorteilhafterweise besteht die Membran wenigstens teilweise aus Metall, da sich durch den Einsatz von Metallen hervorragende thermische Festigkeiten herstellen lassen. Von Vorteil ist außerdem, daß durch einen Führungskörper am abspritzseitigen Ende des Brennstoffeinspritzventils der Betätigungskörper zur Minimierung von Winkelfehlern geführt wird und dadurch außerdem die Möglichkeit gegeben ist, die Membran an ihren Enden, d.h. entlang ihres Umfangs, hydraulisch dicht zu befestigen. Im weiteren kann durch die Begrenzung des Aktorraums durch die Membran, den Führungskörper, das Aktorgehäuse, einen abspritzfernen Führungskörper, einen Kompensatorbüchse und einen Dichtung, den dadurch geschaffene Aktorraum mit einer elektrisch nichtleitenden Flüssigkeit gefüllt werden. Dies ist vorteilhaft, weil dadurch die starken Belastungen, die beim Betrieb insbesondere durch Druckunterschiede auf die Dichtung und die Membran entstehen, vermieden, zumindest aber vermindert werden. Durch die verschiedenen möglichen geometrischen Formen des Ventilschließkörpers, läßt sich insbesondere die Belastung der Membran bei Kontakt mit dem Ventilschließkörper variieren.

Als weitere vorteilhafte Weiterbildung des erfindungsgemäßen Brennstoffeinspritzventils ist die Ausstattung mit einem Kompensator zu nennen. Der Kompensator gleicht Längenänderungen des Aktors aufgrund thermischer Einflüsse aus. Um einen Brennstoffeintrag in den Aktorraum zu verhindern, ist auch hier eine Dichtung vorgesehen, die eine Brennstoffleckage in den Aktorraum sicher verhindert. Die geometrische Form der Dichtung ist vorzugsweise wellrohrförmig. Damit kann die Dichtung der Bewegung der Kompensatorbüchse relativ zum Führungskörper leicht, ohne nennenswerte Belastung folgen.

Durch die erfindungsgemäßen Drosselkanäle werden im Betrieb Druckunterschiede zwischen Arbeitsraum und Kompensationsraum erzeugt, die die Öffnung und Schließung des Brennstoffeinspritzventils unterstützen.

### Zeichnung

Ein Ausführungsbeispiel der Erfindung ist in der Zeichnung vereinfacht dargestellt und in der nachfolgenden Beschreibung näher erläutert. Es zeigt:

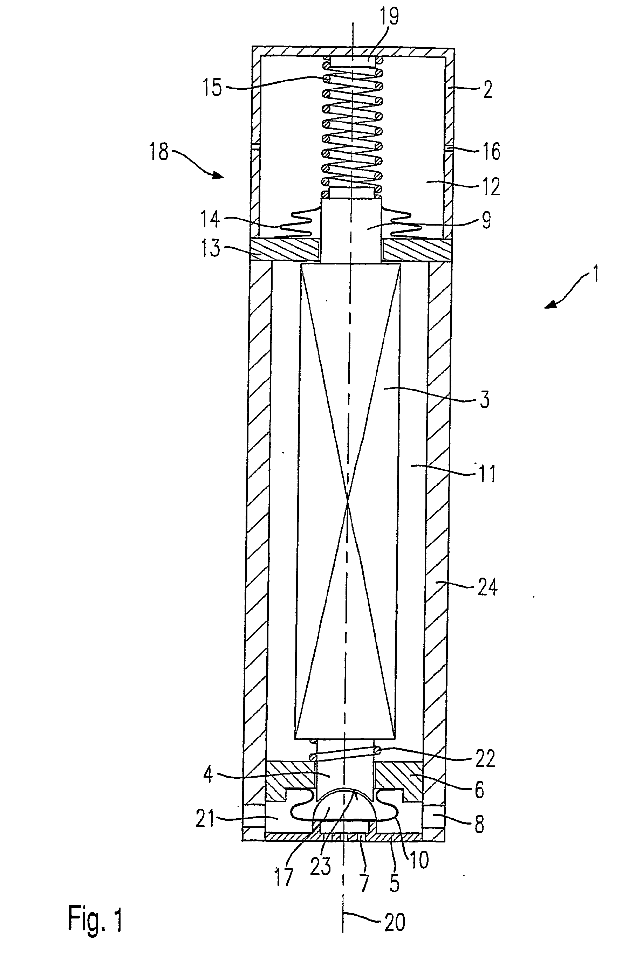

- Fig. 1: einen schematischen Schnitt durch ein Ausführungsbeispiel eines erfindungsgemäß ausgestalteten Brennstoffeinspritzventils.

### Beschreibung des Ausführungsbeispiels

Nachfolgend wird ein Ausführungsbeispiel der Erfindung beispielhaft beschrieben.

Ein in Fig. 1 dargestelltes Ausführungsbeispiel eines erfindungsgemäßen Brennstoffeinspritzventils 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem piezoelektrischen Aktor 3 der über nicht dargestellte elektrische Anschlüsse erregt wird. Der piezoelektrische Aktor 3 kann in mehreren Lagen als sog. Piezostack aufgebaut sein. Der Aktor 3 befindet sich in einem Aktorgehäuse 1. Am abspritzseitigen Ende des Aktors 3 befindet sich ein Betätigungskörper 4 welcher in diesem Ausführungsbeispiel über die Kraftwirkung einer Feder 22, welche am Betätigungskörper 4 angebracht ist und sich auf einem ersten Führungskörper 6 abstützt, in ständiger Anlage zum Aktor 3 gehalten wird. Verschiebungen zwischen dem Aktor 3 und dem Betätigungskörper 4 in rechtwinkliger Richtung zur Abspritzrichtung können beispielsweise durch einen Eingriff des Betätigungskörpers 4 in eine nicht dargestellte Vertiefung im Aktor 3 verhindert werden. Der erste Führungskörper 6, der zwischen einem Aktorraum 11 und einem Arbeitsraum 21 an der Innenseite eines Aktorgehäuses 24 angebracht ist, übernimmt die Führung des Betätigungskörpers 4 entlang einer Betätigungsachse 20. Der Führungskörper 6 ist durch geeignete Fügeverfahren an dem Aktorgehäuse 24 angebracht, insbesondere durch schweißen oder löten.

Am abspritzseitigen Ende des Betätigungskörpers 4 befindet sich eine sphärische Vertiefung 23, in welche ein im Ausführungsbeispiel halbkugelförmiger Ventilschließkörper 17 mit seiner abspritzfernen halbkugelförmigen Seite gleitend eingreift. Da der Ventilschließkörper 17, je nach Betriebszustand, durch Brennstoffdruck, der Auflagekraft auf einen Ventilsitzkörper 5 und/oder durch die Spannkraft einer Membran 10 in der sphärischen Vertiefung 23 des Betätigungskörpers 4 gehalten wird, kann sich sein Mittelpunkt relativ zur Betätigungsachse 20 nicht verschieben. Durch die gleitende Lagerung ist er jedoch in der Lage, sich eventuellen Verschiebungen der Symmetrieachse des Betätigungskörpers 4 bzw. des Aktors 3 aus der Betätigungsachse 20 so anzupassen, daß er einen Ventilsitzkörper 5 unter Zwischenlage der Membran 10 sicher abdichtet ohne die Membran 10 unzulässig zu belasten.

Die Membran 10 besteht vorzugsweise zumindest teilweise aus Metall und ist flexibel. Der Aktorraum 11 wird abspritzseitig von der Membran 10 und dem ersten Führungskörper 6 gegen den Arbeitsraum 21 abgedichtet. Die Membran 10 ist so an dem ersten Führungskörper 6 angebracht und umfaßt dabei den Ventilschließkörper 5 und den Betätigungskörper 4 in einer Weise, daß Brennstoff vom Arbeitsraum 21 nicht in den Aktorraum 11 dringen kann. Die Membran 10 kann sich dabei jedoch den Bewegungen des Ventilschließkörpers 17 entlang der Betätigungsachse 20 anpassen. Der Arbeitsraum 21 wird durch den Ventilsitzkörper 5 und die Membran 10 gegen den nicht dargestellten Brennraum abgedichtet, wobei bei vom Ventilsitzkörper 5 abgehobener Membran 10 durch mindestens eine Abspritzöffnung 7 im Ventilsitzkörper 5 eine Verbindung zum nicht dargestellten Brennraum besteht. Brennstoff wird durch den Brennstoffkanal 8 dem Arbeitsraum 21 unter Druck zugeführt.

Am abspritzfernen Ende des Brennstoffeinspritzventils 1 befindet sich ein Ausgleichsgehäuse 2. Der im Ausgleichsgehäuse 2 befindliche Kompensationsraum 12 beinhaltet einen Kompensatorfuß 19, eine Kompensatorfeder 15, eine Kompensatorbüchse 9 sowie eine in diesem Ausführungsbeispiel wellrohrförmig ausgeführte Dichtung 14. Der Kompensationsraum 12 wird vom Aktorraum 11 durch einen Führungskörper 13, die Kompensatorbüchse 9 sowie durch die flexible und elastische Dichtung 14 abgegrenzt. An den Seiten des Ausgleichsgehäuses 2 sind Drosselkanäle 16 eingebracht. An dem zumindest einen Drosselkanal 16 liegt, von außerhalb des Brennstoffeinspritzventils 1, jederzeit der gleiche Brennstoffdruck an wie an dem Brennstoffkanal 8. Die Kompensatorfeder 15 stützt sich am abspritzfernen Ende des Ausgleichsgehäuses 2 innen über den Kompensatorfuß 19 ab. Das abspritznahe Ende der Kompensatorfeder 15 greift in das abspritzferne Ende der Kompensatorbüchse 9 ein, welche sich auf dem Aktor 3 abstützt. Auch hier, ähnlich wie am abspritzseitigen Ende des Aktors 3, kann durch einen Eingriff der Kompensatorbüchse 9 in eine nicht dargestellte Vertiefung im abspritzfernen Ende des Aktors 3 eine Verschiebung rechtwinklig zur Abspritzrichtung verhindert werden. Die Kompensatorfeder 15 befindet sich stets unter Vorspannung.

Der Aktorraum 11, der sich bis unmittelbar an die begrenzende Dichtungen 14 und an die Membran 10 erstreckt, kann mit einem elektrisch nichtleitenden Öl oder einer anderen geeigneten Flüssigkeit gefüllt sein. Dies dient insbesondere zur besseren Verlustwärmeabfuhr des Aktors und zur Druckentlastung von Membran 10 und Dichtung 14 während den verschiedenen Betriebszuständen.

Im Ruhezustand besitzt der Aktor 3 seine Ruhelänge. Die Vorspannung der Kompensatorfeder 15 bewirkt, daß die Membran 10 über den Ventilschließköper 17, den Aktor 3, und die Kompensatorbüchse 9 dichtend auf den Ventilsitzkörper 5 gedrückt wird. Arbeitsraum 21 und Kompensationsraum 12 sind mit Brennstoff gefüllt. Der Ruhezustand entspricht beispielsweise dem Stillstand der Brennkraftmaschine.

Zur Vorbereitung auf den Betrieb des erfindungsgemäßen Brennstoffeinspritzventils 1 wird zunächst der Aktor 3 mit einer elektrischen Spannung beaufschlagt. Dies führt dazu, daß sich der Aktor 3 ausdehnt. Als Folge davon wird die Kompensatorfeder 15 gestaucht und die Andruckkraft der Membran 10 auf den Ventilsitzkörper 5 erhöht sich. Simultan zur elektrischen Spannungsbeaufschlagung des Aktors 3 wird der Brennstoffdruck, welcher am Brennstoffkanal 8 sowie an dem Drosselkanal 16 anliegt, erhöht. Obwohl der Druckanstieg durch die Drosselkanäle 16 im Kompensationsraum 12 langsamer verläuft als im Arbeitsraum 21, wird aufgrund der Federkraft der Kompensatorfeder 15 der Arbeitsraum 21 zuverlässig gegen den nicht dargestellten Brennraum abgedichtet. Durch die erfindungsgemäße Membran 10 und ihre erfindungsgemäße Anbringung wird ein Brennstoffeintrag aus dem Arbeitsraum 21 in den Aktorraum 11 trotz begünstigendem Druckgefälle sicher verhindert.

Die elektrische Spannung, mit der der Aktor 3 beaufschlagt wird, beträgt beispielsweise 200 V. Zum öffnen des Brennstoffeinspritzventils 1 wird diese Spannung kurzzeitig auf beispielsweise 0 V gesenkt, worauf sich der Aktor 3 verkürzt, das Brennstoffeinspritzventil 1 öffnet und der Brennstoff durch die zumindest eine Abspritzöffnung 7 abgespritzt wird. Die Hubbewegung des abspritzseitigen Endes des Aktors 3, die es dem System Membran 10, Ventilschließkörper 17, Betätigungskörper 4 erlaubt, sich entgegen der Abspritzrichtung zu bewegen, beruht auf zwei Effekten: zum einen auf der Verkürzung des Aktors 3; zum anderen darauf, daß sich durch die Verkürzung des Aktors 3 im Kompensationsraum 12 relativ zum Arbeitsraum 21 ein Unterdruck ausbildet, weil durch die erfindungsgemäßen Drosselkanäle 16 Brennstoff nicht schnell genug nachströmen kann. Dadurch erfolg die Verkürzung des Aktors 3 im wesentlichen nur vom abspritzfernen Ende des Aktors 3 in Abspritzrichtung. Letztgenannter Effekt bleibt auch bei einer Längenänderung des Aktors 3 durch Temperatureinfluß erhalten.

Zur Abdichtung des Arbeitsraumes 21 gegen die Abspritzöffnung 7 bzw. den nicht dargestellten Brennraum, wird der Aktor 3 wieder mit einer höheren elektrischen Spannung, beispielsweise 200 V, beaufschlagt. Geschieht dies schnell genug, beispielsweise durch eine steile Spannungsflanke, dehnt sich der Aktor 3 so schnell aus, daß relativ zur Ausdehnungsgeschwindigkeit des Aktors 3 der Brennstoff im Ausgleichsgehäuse 2 nur langsam durch die Drosselkanäle 16 entweichen kann. Als Folge davon geschieht die Längenzunahme des Aktors 3 im wesentlichen in Abspritzrichtung, so daß die Membran 10 über den Betätigungskörper 4 sowie den Ventilschließkörper 17 auf den Ventilsitzkörper 5 gedrückt wird, wobei die bewegliche Lagerung des Ventilschließkörpers 17 in dem Betätigungskörper 4 etwaige Auslenkungen der Symmetrieachsen des Betätigungskörper 4 bzw. des Aktors 3 aus der Betätigungsachse 20 ausgleicht.

Während der Zeit in der das Brennstoffeinspritzventil 1 geschlossen ist, kann sich der Brennstoffdruck im Ausgleichsgehäuse 2 dem Brennstoffdruck im Arbeitsraum 21 ausgleichen. Darauf kann die elektrische Spannung am Aktor 3 wieder gesenkt werden, um das Brennstoffeinspritzventil 1 wieder zu öffnen.

Um den Ruhezustand des Brennstoffeinspritzventils 1 herbeizuführen, was beispielsweise einer stillstehenden Brennkraftmaschine entspricht, wird der Brennstoffdruck beispielsweise auf Umgebungsdruck gesenkt und der Aktor 3 entladen. Die Drucksenkung wirkt sich durch die Drosselwirkung der Drosselkanäle 16 zuerst auf den Arbeitsraum 21 aus, so daß trotz der gleichzeitigen Verkürzung des Aktors 3 die Membran 10 den Arbeitsraum 21 sicher abdichtet. Im Ruhezustand reicht die durch die Kompensatorfeder 15 erzeugte Andruckkraft der Membran 10 auf den Ventilsitzkörper 5 aus, um den Arbeitsraum 21 sicher vom nicht dargestellten Brennraum abzudichten.

Langsame, thermische bedingte Längenänderungen des Aktors 3 werden durch den Kompensator 18 ausgeglichen.

Die Erfindung ist nicht auf die dargestellten Ausführungsbeispiele beschränkt und z. B. auch für Brennstoffeinspritzventile 1 mit anders gearteter Temperaturkompensation und magnetostriktiven Aktoren anwendbar.

## Patentansprüche

1. Brennstoffeinspritzventil (1), insbesondere zum direkten Einspritzen von Brennstoff in einen Brennraum einer Brennkraftmaschine, mit einem in einem Aktorraum (11) angeordneten piezoelektrischen oder magnetostriktiven Aktor (3), der über einen Ventilschließkörper (17) eine Membran (10) betätigt, die mindestens eine Abspritzöffnung (7) abdichtet oder öffnet,
**dadurch gekennzeichnet,**
**dass** die Membran (10) den Ventilschließkörper (17) so umfasst, dass der Brennstoff nicht in den Aktorraum (11) dringen kann und
**dass** ein der Membran (10) abgewandter Teil des Ventilschließkörpers (17) in eine sphärische Vertiefung (23) eines mit dem Aktor (3) in Wirkverbindung stehenden Betätigungskörpers (4) eingreift.

2. Brennstoffeinspritzventil nach Anspruch 1,
**dadurch gekennzeichnet,**
**dass** die Membran (10) zumindest teilweise aus Metall besteht.

3. Brennstoffeinspritzventil nach Anspruch 1,
**dadurch gekennzeichnet,**
**dass** der der Membran (10) abgewandte Teil des Ventilschließkörper (17) beweglich im Betätigungskörper (4) gelagert ist.

4. Brennstoffeinspritzventil nach einem der vorherigen Ansprüche,
**dadurch gekennzeichnet,**
**dass** der Ventilschließkörper (4) unter Zwischenlage der Membran (10) abdichtend auf einem der Membran (10) zugewanden Teil eines Ventilsitzkörpers (5) aufliegt.

5. Brennstoffeinspritzventil nach Anspruch 1 oder 3,
**dadurch gekennzeichnet,**
**dass** der Betätigungskörper (17) in einem ersten Führungskörper (6) geführt ist.

6. Brennstoffeinspritzventil nach Anspruch 5,
**dadurch gekennzeichnet,**
**dass** die Membran (10) hydraulisch dichtend an dem ersten Führungskörper (6) angebracht ist.

7. Brennstoffeinspritzventil nach Anspruch 5 oder 6,
**dadurch gekennzeichnet,**
**dass** der Aktorraum (11) durch die Membran (10), den Führungskörper (6), ein Aktorgehäuse (24), einen zweiten Führungskörper (13), eine Kompensatorbüchse (9) und eine Dichtung (14) abgeschlossen ist.

8. Brennstoffeinspritzventil nach Anspruch 7,
**dadurch gekennzeichnet,**
**dass** die Dichtung (14) als Wellrohr oder in einer wellrohrähnlichen Bauform ausgeführt ist.

9. Brennstoffeinspritzventil nach Anspruch 7 oder 8,
**dadurch gekennzeichnet,**
**dass** die Dichtung (14) an ihren Enden fest und hydraulisch dicht am zweiten Führungskörper (13) und an der Kompensatorbüchse (9) angebracht ist.

10. Brennstoffeinspritzventil nach einem der Ansprüche 7, 8 oder 9,
**dadurch gekennzeichnet,**
**dass** die Dichtung (14) wenigstens teilweise flexibel und elastisch ist.

11. Brennstoffeinspritzventil nach einem der vorherigen Ansprüche,
**dadurch gekennzeichnet,**
**dass** der Aktorraum (11) mit einem elektrisch nichtleitenden Fluid gefüllt ist.

12. Brennstoffeinspritzventil nach einem der vorherigen Ansprüche,
**dadurch gekennzeichnet,**
**dass** der Ventilschließkörper (17) halbkugelförmig, ellipsoidförmig oder kugelförmig ausgebildet ist.

13. Brennstoffeinspritzventil nach einem der vorherigen Ansprüche,
**dadurch gekennzeichnet,**
**dass** eine thermische Längenänderungen des Aktors (3) durch einen Kompensator (18) ausgeglichen wird.

14. Brennstoffeinspritzventil nach Anspruch 13,
**dadurch gekennzeichnet,**
**dass** ein Kompensatorfuß (19) an einem Ausgleichgehäuse (2) so angebracht ist, dass eine mit ihm verbundene Kompensatorfeder (15) entlang ihrer Federachse über eine Kompensatorbüchse (9) auf den Aktor (3) einwirkt.

15. Brennstoffeinspritzventil nach Anspruch 13 oder 14,
**dadurch gekennzeichnet,**
**dass** zumindest ein Drosselkanal (16) vorhanden ist, der in seiner Größe so bemessen ist, dass sich gleiche Druckänderungen an einem Brennstoffkanal (8) und dem Drosselkanal (16) in einem mit dem Drosselkanal (16) verbundenen Kompensationsraum (12) weniger schnell auswirken als in einem mit dem Brennstoffkanal (8) verbundenen Arbeitsraum (21).

## Claims

1. Fuel injection valve (1), in particular for directly injecting fuel into a combustion chamber of an internal combustion engine, having a piezoelectric or magnetostrictive actuator (3) which is arranged in an actuator space (11) and activates, via a valve-closing element (17), a diaphragm (10) which seals or opens at least one ejection opening (7), **characterized in that** the diaphragm (10) surrounds the valve-closing element (17) in such a way that the fuel cannot penetrate the actuator space (11), and **in that** part of the valve-closing element (17) which faces away from the diaphragm (10) engages in a spherical depression (23) in an activation element (4) which is operatively connected to the actuator (3).

2. Fuel injection valve according to Claim 1,
**characterized in that** the diaphragm (10) is composed at least partially of metal.

3. Fuel injection valve according to Claim 1,
**characterized in that** the part of the valve-closing element (17) which faces away from the diaphragm (10) is movably mounted in the activation element (4).

4. Fuel injection valve according to one of the preceding claims, **characterized in that** the valve-closing element (4) bears in a seal-forming fashion, with the intermediate positioning of the diaphragm (10), on one part of a valve seat element (5) which faces the diaphragm (10).

5. Fuel injection valve according to Claim 1 or 3, **characterized in that** the activation element (17) is guided in a first guide element (6).

6. Fuel injection valve according to Claim 5,
**characterized in that** the diaphragm (10) is attached in a hydraulically seal-forming fashion to the first guide element (6).

7. Fuel injection valve according to Claim 5 or 6, **characterized in that** the actuator space (11) is closed off by the diaphragm (10), the guide element (6), an actuator housing (24), a second guide element (13), a compensator sleeve (9) and a seal (14).

8. Fuel injection valve according to Claim 7,
**characterized in that** the seal (14) is embodied as a corrugated tube or in a shape similar to a corrugated tube.

9. Fuel injection valve according to Claim 7 or 8, **characterized in that** the seal (14) is attached at its ends in a fixed and hydraulically sealed fashion to the second guide element (13) and to the compensator sleeve (9).

10. Fuel injection valve according to one of Claims 7, 8 or 9, **characterized in that** the seal (14) is at least partially flexible and elastic.

11. Fuel injection valve according to one of the preceding claims, **characterized in that** the actuator space (11) is filled with an electrically nonconductive fluid.

12. Fuel injection valve according to one of the preceding claims, **characterized in that** the valve-closing element (17) is embodied in a hemispherical shape, ellipsoidal shape or spherical shape.

13. Fuel injection valve according to one of the preceding claims, **characterized in that** a thermal change in length of the actuator (3) is compensated by a compensator (18).

14. Fuel injection valve according to Claim 13,
**characterized in that** a compensator foot (19) is attached to a compensation housing (2) in such a way that a compensator spring (15) which is connected to it acts along its spring axis on the actuator (3) via a compensator sleeve (9).

15. Fuel injection valve according to Claim 13 or 14, **characterized in that** at least one throttle duct (16) is present, which is dimensioned in its size in such a way that identical changes in pressure at a fuel duct (8) and the throttle duct (16) have an effect less quickly in a compensation space (12) connected to the throttle duct (16) than in a working space (21) connected to the fuel duct (8).

## Revendications

1. Injecteur de carburant (1), en particulier pour l'injection directe de carburant dans une chambre de combustion d'un moteur à combustion interne, comprenant un actionneur (3) piézoélectrique ou magnétostrictif disposé dans une chambre d'actionneur (11), et qui, par un obturateur de soupape (17), actionne une membrane (10) qui étanche ou ouvre au moins une ouverture d'éjection,
**caractérisé en ce que**
la membrane (10) entoure l'obturateur de soupape (17) de sorte que le carburant ne puisse pas pénétrer dans la chambre d'actionneur (11),
une partie de l'obturateur de soupape (17) détournée de la membrane (10) s'engage dans un creux sphérique (23) d'un organe d'actionnement (4) en liaison active avec l'actionneur (3).

2. Injecteur de carburant selon la revendication 1,
**caractérisé en ce que**
la membrane (10) est au moins en partie en métal.

3. Injecteur de carburant selon la revendication 1,
**caractérisé en ce que**
la partie d'obturateur (17) détournée de la membrane (10) est logée de façon mobile dans l'organe d'actionnement (4).

4. Injecteur de carburant selon l'une quelconque des revendications précédentes,
**caractérisé en ce que**
l'obturateur (17) repose de façon étanche sur une partie du corps de siège de soupape (5) tournée vers la membrane (10), la membrane (10) étant intercalée.

5. Injecteur de carburant selon la revendication 1 ou 3,
**caractérisé en ce que**
l'organe d'actionnement (4) est guidé dans un premier corps de guidage (6).

6. Injecteur de carburant selon la revendication 5,
**caractérisé en ce que**
la membrane (10) est fixée de façon étanche hydrauliquement au premier corps de guidage (6).

7. Injecteur de carburant selon la revendication 5 ou 6,
**caractérisé en ce que**
la chambre d'actionneur (11) est limitée par la membrane (10), le corps de guidage (6), un boîtier d'actionneur (24), un second corps de guidage (13), une boîte de compensation (9) et un élément d'étanchéité (14).

8. Injecteur de carburant selon la revendication 7,
**caractérisé en ce que**
l'élément d'étanchéité (14) est un tube ondulé ou présente une forme de construction similaire à un tube ondulé.

9. Injecteur de carburant selon la revendication 7 ou 8,
**caractérisé en ce que**
l'élément d'étanchéité (14) est fixé, à ses extrémités, de façon hydrauliquement étanche au second corps de guidage (13) et à la boîte de compensation (9).

10. Injecteur de carburant selon l'une quelconque des revendications 7, 8 ou 9,
**caractérisé en ce que**
l'élément d'étanchéité (14) est au moins en partie flexible et élastique.

11. Injecteur de carburant selon l'une quelconque des revendications précédentes,
**caractérisé en ce que**
la chambre d'actionneur (11) est remplie par un fluide non conducteur électriquement.

12. Injecteur de carburant selon l'une quelconque des revendications précédentes,
**caractérisé en ce que**
l'obturateur de soupape (17) présente une forme demi-sphérique, elliptique ou sphérique.

13. Injecteur de carburant selon l'une quelconque des revendications précédentes,
**caractérisé en ce que**
des variations de longueur thermiques de l'actionneur (3) sont compensées par un compensateur (18).

14. Injecteur de carburant selon la revendication 13,
**caractérisé en ce qu'**
un pied de compensateur (19) est fixé à un boîtier de compensation (2) de sorte qu'un ressort de compensation (15) relié à celui-ci agisse le long de son axe de ressort sur l'actionneur (3) par l'intermédiaire d'une boîte de compensation (9).

15. Injecteur de carburant selon la revendication 13 ou 14,
**caractérisé en ce qu'**
au moins un canal d'étranglement (16) est dimensionné de sorte que des variations de pression identiques sur une conduite de carburant (8) et le canal d'étranglement (16) agissent moins rapidement dans une chambre de compensation (12) reliée au canal d'étranglement (16) que dans une chambre de travail (21) reliée à la conduite de carburant (8).
